# EUROPEAN PATENT APPLICATION

(11) **EP 3 225 605 A1**
(43) Date of publication of application: **04.10.2017**
(21) Application number: 14906989.0
(22) Date of filing: 10.12.2014
(51) Int. Cl.: C04B 24/32, C04B 24/24, C04B 24/18, C04B 24/20

(54) **TK-JH MINERAL INTERFACE ACTIVE MATERIAL, AND PREPARATION METHOD AND USE METHOD THEREFOR**

(30) Priority: 28.11.2014 CN 201410709868
(71) Applicant: Su, Zebin, Chengdu, Sichuan 610000 (CN)
(72) Inventor: SU, Lin, Chengdu Sichuan 610000 (CN)
(74) Representative: Cabinet Chaillot
(86) International application number: PCT/CN2014/001114
(87) International publication number: WO 2016/082060

(57) **Abstract**

The present disclosure discloses a TK-JH mineral interface active material, and a preparation method and a use method thereof. The TK-JH mineral interface active material consists of the following ingredients in percentage by weight: 30-60% of sulfate, 20-30% of silicate, 20-30% of plasticizing water reducing agent, 3-6% of phosphate and 1-3% of alkylol amine salt. The TK-JH mineral interface active material is a green revolution of cement binding materials and foundation engineering, can make great contribution to energy conservation, environment protection, protection of mine resources, utilization of waste resources and sustainable development and long-term great achievement of circular economy, and can be a sunrise industry of binding materials of the construction industry and a historical turning of application of novel materials of the construction industry.

## Description

### Field of the Invention

The present disclosure relates to a TK-JH mineral interface active material, and a preparation method and a use method thereof.

### Background of the Invention

Binding materials are needed as binding, solidification, enhancing and densification components in foundation engineering of buildings (and structures). Calcined limestone and cement are taken as main binding materials for preparing cement concrete and mortar, namely, manufacturing artificial stone in the constructional engineering. Therefore, binding materials such as cement, lime and the like became indispensable, essential and significant construction components in concrete and mortar in the foundation engineering of the construction industry long ago. From 2005 to the present days, the annual sales volume of China is up to about 2.3 billion tons for ten consecutive years, ranks first in the world, and accounts for more than 35% of the cement production and sales volume of the whole world.

Along with rapid development of modernization construction of China, foundation engineering has become important support of economic construction of China or the world, the government investment is more than 10000 billion yuan every year, and plus private investment, the economic construction is up to 30000-40000 billion yuan, of which the foundation engineering accounts for about 40%. The annual cement production and sales volume is kept greater than 2.2 billion tons, and 4.0 billion cubic meters of concrete and more than 3.0 billion cubic meters of mortar are produced.

However, cement is a product with high energy consumption and high pollution. To produce one ton of cement, 1.6 tons of ore (CaCO₃) shall be explored, about 80kg of raw coal for calcinations is consumed, 70-80 kilowatt-hours are used, and meanwhile about 800kg of carbon dioxide can be generated, so that great pollution and damage can be done to the atmospheric environment and people's livelihood. At the same time, stone and sand account for 80% of several billion cubic meters of concrete and mortar, a great deal of stone powder and waste stone can be generated in stone and sand exploration, a great deal of waste stone can be generated in excavation of construction sites, and plus excavation of various mineral products and production of stone powder and rock, the environment can be severely polluted, mines, farmlands, forests, grasslands, deserts, sand beaches and rivers can be damaged. In China, production of cement and steel and exploration of various minerals become the greatest and severest pollution sources and energy consumption products, which further restrict synchronous development of production, economy and environment.

Because of the need that the economic development is promoted by traffic modernization in China and other countries, rapid development of highways, high speed railways, subways, hydropower, metallurgy, national defense, sea-crossing engineering and subsea tunnels is imperative, and more and more attentions are paid to cement-based concrete binding materials. However, how to well reduce or substitute binding materials in which cement takes absolute predominance by using new materials, new processes and new techniques and to manufacture structures with identical or even better quality has become the most important historical subjects in the field of construction all over the world, particularly in study of the fields of concrete and mortar for foundation engineering.

In the concrete and mortar engineering of modern structures, cement is an important binding material. However, when being produced, cement can consume a great deal of energy and can produce severe pollution, and in addition, when being used, the durability of a structure can be affected. In concrete for constructing structures, cement is a component which can be more easily eroded as compared with sand and stone in aggregate, particularly in environments with various acid-base corrosive mediums, freezing and thawing cycle, abrasion, cavitation and wind erosion, leakage, carbonization and the like, set cement can be firstly damaged. Meanwhile, cracks, seams and the like caused by shrinkage (plastic shrinkage, chemical shrinkage and dry-wet shrinkage) in hydration and hardening periods of the set cement all mean that the set cement cannot endure erosion or severe damage of severe environments.

Therefore, property and durability improvement of concrete also becomes an important condition of future foundation engineering construction.

### Summary of the Invention

The present disclosure aims to provide a TK-JH mineral interface active material and a preparation method thereof, which can reduce pollution caused by carbon dioxide generated in cement calcining to the atmospheric environment and improve the durability of construction engineering, for example, reduce volume shrinkage, reduce cracks and seams caused by hydration heat and adiabatic temperature rise, improve the resistance of the construction engineering to abrasion, wind erosion, cavitation and acid and base corrosion, and improve the tightness, the impermeability and the like.

The present disclosure is achieved through the technical solution as follows:
a TK-JH mineral interface active material, consisting of the following ingredients in percentage by weight: 30-60% of sulfate, 20-30% of silicate, 20-30% of plasticizing water reducing agent, 3-6% of phosphate and 1-3% of alkylol amine salt, or consisting of 67-79% of complex containing sulfate, silicate and phosphate, 1-3% of alkylol amine salt and 20-30% of plasticizing water reducing agent, wherein the sum of the weight percents of the raw materials in either of the above two solutions is 100%.

Specifically, the sulfate is selected from one or more of aluminum sulfate, low-iron aluminum sulfate, liquid aluminum sulfate, calcium sulfate, ferrous sulfate, potassium sulfate, sodium sulfate, sodium thiosulfate and aluminum potassium sulfate. The sulfate in the present disclosure mainly plays roles of adding active metallic ions of iron, aluminum, potassium and sodium and sulfate radical anions in a non-active mineral material, and generating electric adsorption and ionic bond interface chemical reaction at certain temperature under mechanical abrasion, and thus inactive mineral ions can be changed into active ionic compounds. For example, limestone mainly consists of inactive calcium carbonate, when the limestone reacts with aluminum sulfate, aluminum potassium sulfate, ferrous sulfate, sodium sulfate, iron-aluminide-containing compounds and the like, minerals such as calcium sulfoaluminate, calcium ferroalumnate, potassium sodium calcium feldspar, sodium carbonate and the like with activity can be generated, and thus interface activity indexes of the non-active minerals can be improved.

Specifically, the silicate is selected from one or more of aluminum silicate, potassium silicate, sodium silicate, sodium metasilicate pentahydrate, sodium potassium silicate, silicic acid, silicon dioxide powder and superfine silicon dioxide micropowder. The silicate in the present disclosure plays an important role of reacting with the non-active minerals at certain temperature under mechanical action so as to generate minerals such as calcium silicate, aluminum calcium silicate, dicalcium silicate and the like with certain interface activity, and is a significant component of set silicate cement with activity.

Specifically, the plasticizing water reducing agent is selected from one or more of a polycarboxylate water reducing agent, a naphthalenesulfonate water reducing agent, a sulfamate water reducing agent, a melamine water reducing agent, a lignin water reducing agent, starch ether, cellulose ether, an anti-cracking anti-corrosion plasticizer, polyoxyethylene ether and phosphoric acid trisphenol polyether. The plasticizing water reducing agent in the present disclosure plays important roles of forming anion surface active films on the non-active minerals, improving electrostatic adsorption of non-active mineral ions and improving combination reaction performance of non-active ions such as calcium oxide, silicon oxide, aluminum oxide and ferric oxide, also plays a role of electrostatic adsorption and rejection, has effects of improving dispersion of the non-active ions and reducing water consumption in watering mixing, and has a function of improving application property, compactness , stability and strength.

Specifically, the phosphate is selected from one or more of phosphoric acid, sodium phosphate, zinc phosphate, ferrophosphorus powder and sodium tripolyphosphate.

The phosphate in the present disclosure mainly plays a role of increasing the content of phosphate radical anions in the non-active minerals, also plays a role of catalysis and mediation for formation of minerals with activity, and has functions of adjusting pH values and accelerating generation of active substances.

Specifically, the alkylol amine salt is selected from one or more of triethanolamine, triisopropanolamine, ethidene diamine and triethylamine. The alkylol amine salt in the present disclosure plays important roles of being permeated into minerals to accelerate mineral fission so as to improve the grindability of the minerals. Meanwhile mutual adsorption of mineral ions and combination reaction of basic ions and acidic ions can be accelerated, and the dissolving speed can be also increased. When the alkylol amine salt reacts with active ions, dense molecular chains can be generated, so that the compactness can be improved, the porosity and the pore radius can be reduced, the impermeability, the corrosion resistance and the anti-freezing property of a structure can be improved, and moreover the strength value of the structure can be increased.

Specifically, when the TK-JH mineral interface active material consists of 67-79% of complex containing sulfate, silicate and phosphate, 1-3% of alkylol amine salt and 20-30% of plasticizing water reducing agent in percentage by weight, the complex is selected from one or more of coal ash, coal slag, bauxite, ferric slag, phosphorus slag, ferrophosphorus powder, silica fume, ore slag, ashstone, silica sand, waste brick stone, cement concrete construction wastes and water glass in which the comprehensive index of aluminum oxide, silicon dioxide, ferric oxide and phosphorus pentoxide is greater than 90%, and is a liquid obtained through sulfuric acid acidation treatment, concentration and filtration or a solid obtained through further spray-drying.

A preparation method of the TK-JH mineral interface active material, including the following steps:
(a1) adding sulfate, silicate or a silicon compound, phosphate and a plasticizing water reducing agent into a mixing kettle, mixing for 3-4 hours at a constant temperature of 60-80°C;
(a2) adding alkylol amine salt into the mixing kettle, continuously stirring for 30-60 minutes, and cooling to the normal temperature, thereby preparing a TK-JH mineral interface active material (agent) solid; further adding tap water into the solid in a ratio of 1:1 (the ratio of the solid to the water is 1:1), and sufficiently dissolving and stirring for 1-3 hours for polymerization reaction at 25-45°C, thereby obtaining a TK-JH mineral interface active material (agent) liquid product.

Another preparation method of the present invention is as follows: feeding a liquid plasticizer of which the solid content is 35-45% into a reaction kettle, sufficiently stirring at 25-45°C, adding water, sequentially adding sulfate, silicate, phosphate and alkylol amine salt for sufficient dissolution and polymerization for 3-6 hours, and cooling to the normal temperature, thereby obtaining a TK-JH mineral interface active material (agent) liquid product, and further performing spray-drying, thereby obtaining a solid product.

Another preparation method is as follows:
(b1) adding one or more of coal ash, coal slag, bauxite, ferric slag, phosphorus slag, ferrophosphorus powder, silica fume, ashstone, ore slag, silica sand, waste brick stone, cement concrete construction wastes and water glass into a dissolving tank, uniformly stirring, adding sulfuric acid to extract for 4-8 hours at 60-90°C, precipitating, and filtering, thereby obtaining a complex containing sulfate, silicate and phosphate;
(b2) further adding the plasticizing water reducing agent into the complex, performing polymerization reaction for 3-6 hours at 25-45°C, subsequently adding the alkylol amine salt, continuously stirring for 1-2 hours for polymerization, reducing the temperature, and cooling, thereby obtaining a TK-JH mineral interface active material (agent) liquid; and further performing spray-drying, thereby obtaining a TK-JH mineral interface active material (agent) solid product.

The TK-JH mineral interface active material can be used by cement manufacturing companies as an admixture stone powder interface active agent and non-active mineral stone powder for on-site concrete mortar stations and powder mill plants to equivalently or excessively substitute cement clinker or cement content, coal ash, mineral admixtures and the like. A practical use method is as follows: uniformly spraying the TK-JH mineral interface active material (agent) on the surface of a non-active mineral material, feeding into a powder mill for powder milling and curing, thereby obtaining a non-active mineral material having active minerals with relatively high activity. Following examples are taken to describe the use method:

A use method of the TK-JH mineral interface active material in a cement manufacturing company: when cement clinker blocks are milled (at the temperature about 60-90°C), adding non-active granite, basalt, placer, iron ore, limestone blocks, ashstone, waste bricks, set cement and the like and other mineral materials, uniformly spraying the TK-JH mineral interface active material (agent) powder (solid) or liquid on the non-active mineral material, together with the cement clinker blocks in a ratio, feeding into a ball mill for powder milling till a fineness mesh number of a cement product, discharging, inspecting and warehousing.

A use method of the TK-JH mineral interface active material in on-site concrete mortar: equipping a powder mill with an appropriate output per machine-hour at a concrete or mortar mixing station (plant), transporting non-active mineral materials to a feeding hole of the powder mill, uniformly spraying the solid or liquid TK-JH mineral interface active material (agent) on non-active mineral materials, feeding into the powder mill at the temperature of 60-90°C, milling and curing for 30-60 minutes till the fineness mesh number is 300-600 meshes, discharging out from the machine, inspecting, packaging, and warehousing, or directly metering and feeding into an ingredient storage system of the concrete or mortar mixing station.

A use method of the TK-JH mineral interface active material in sand, stone, ore and waste mineral material fields: mounting crushing and milling equipment in a field with a proper amount (more than 10000 tons) of non-active mineral materials, uniformly spraying the solid or liquid TK-JH mineral interface active material (agent) on the non-active mineral materials, feeding into a powder mill at the temperature of 60-90°C, milling for 30-60 minutes till the fineness mesh number is 120-220 meshes, discharging out, inspecting, packaging, warehousing, and selling or conveying to a cement product manufacturing plant or an on-site mixing concrete mortar station for use.

The non-active mineral material of the present disclosure is mainly calcium oxide, silicon oxide, ferric oxide and non-active mineral materials containing certain MgO, such as limestone, natural zeolite, dolomite, calcite, quartz stone, sandstone, clay rock, basalt, granite, iron ore, waste construction bricks, set cement, ashstone and the like.

The present disclosure has the following advantages and beneficial effects:
(1) The TK-JHTK-JH mineral interface active material (agent) of the present disclosure can be widely used in cement manufacturing companies, cement product companies, commercial concrete mortar mixing stations, concrete mortar construction companies for on-site foundation construction engineering, various sandstone material plants, non-metallic and non-active mineral mining fields and concrete mortar construction waste processing fields. In chemical and physical mechanical modification modes, non-active minerals can react to generate active minerals with certain or relatively high activity; in cement manufacturing companies, as active admixtures, the non-active mineral materials can substitute and save 30-80% of cement clinker, and technical properties of materials with identical activity can be achieved. In cement concrete mortar product companies, as active admixtures, the non-active mineral materials can substitute and save more than 30-60% of cement or completely substitute coal ash slag powder, and the property of the concrete or mortar with the non-active mineral materials is better than that of a material in a conventional ratio.
(2) After a product of the present disclosure is used, the setting time, the pressure resistance, the breaking strength and the chemical property of cement can conform to technical property indexes of silicate cement and concrete mortar of same grades; the defect that the silicate cement is high in hydration heat is avoided, and the product is most applicable to large-size cement concrete and concrete engineering constructed in hot seasons; defects that fly ash cement, ore slag cement and complex silicate cement are low in hydration heat and low in early strength are overcome, the product is most beneficial to engineering at low temperature and limited duration, the construction can be accelerated, demolding can be carried out ahead of time, and thus the rental fee and labor cost can be saved. Meanwhile for construction engineering which has a relatively long transportation distance, runs short of admixture materials (coal ash and ore slag) and is relatively remote for transportation, (a great deal) of transportation expense can be saved, and the cost of each ton can be reduced by more than 80-800 yuan.
(3) The TK-JH mineral interface active material is particularly remarkable in energy-saving and environment-friendly effect. Viewing from raw material use of the TK-JH mineral interface active material (agent) of the present disclosure, coal ash, ore slag, coal slag, phosphorus slag, ferrophosphorus slag, lithium slag, silicon slag, iron slag, steel slag, ashstone, waste construction bricks, set cement and the like of industrial wastes are taken as main raw materials, so that comprehensive utilization of waste resources is achieved, and the TK-JH mineral interface active material (agent) is applicable to circular economy development; in the production process of the TK-JH mineral interface active material, no "three wastes" is generated, and the environment is not polluted; a relatively small amount of water, electricity and coal is used when the TK-JH mineral interface active material is produced, the energy consumption of each ton of non-active mineral materials only accounts for 10% of that of cement production, and the related enterprise mainly depends on chemical and physical mechanical actions, and thus does not belong to a production enterprise of cement products, steel products or similar products with high energy consumption or great pollution; the product of the present disclosure is non-toxic or harmless, free of smell and environment-friendly; as waste resources are sufficiently utilized, the production process is simple, the production time is short, and the energy consumption and the working intensity are both low, the TK-JH mineral interface active material is low in production cost and product cost, is applicable to all enterprises for production and is beneficial to popularization and application as the material cost is lowered; as the mixing amount of the TK-JH mineral interface active material is low, that is, the mixing amount accounts for 4-8% or lower of non-active mineral material, long-distance transportation can be facilitated, and the transportation radius can be enlarged; the TK-JH mineral interface active material is wide in raw material resource, simple in production process, short in production period and small in investment, plants can be constructed nearby in different areas, the expense can be saved, and the cost can be further lowered. The application of the TK-JH mineral interface active material has the largest advantage in energy consumption and environment protection is that the economic, environmental and social benefits are increased, and moreover when each ton of TK-JH mineral interface active material (agent) is used, more than 20 tons of silicate cement clinker can be saved or substituted, the annual production and sales volume of cement clinker all over the country is about 2.0 billion tons, if 30-50% of cement clinker is replaced (substituted), 3.0-5.0 million tons of high-performance interface active materials can be used, and 0.6-1.0 billion tons of cement clinker can be saved (or the production thereof can be reduced); exploration of 0.9-1.5 billion tons of mineral resources can be reduced each year (each ton of cement clinker needs about 1.5 tons of ore), 0.05-0.08 billion tons of crude coal for calcining the cement clinker can be saved (each ton of cement clinker needs about 80kg of crude coal), 3.0-4.0 billion kilowatt-hours for calcining the cement clinker can be saved (each ton of cement clinker needs about 40-50 kilowatt-hours), 0.5-0.8 billion tons of carbon dioxide emissions can be reduced (about 800kg of carbon dioxide can be emitted when each ton of cement clinker is calcined), and 5-8 million of labor for cement clinker production can be reduced.
(4) When being added into a secondary powder cement product of a cement manufacturing company, the TK-JH mineral interface active material can also effectively increase the output per machine-hour by 20-30%, that is, within the same power consumption and time limit, the cement output can be increased by 20-30%, and at the same time the power consumption and the labor cost can be saved. The annual cement output of the whole country is 2.5 billion tons, then the power consumption for cement production of 20-30 billion kilowatt-hours can be saved, and the labor cost can be saved by about 8-10 billion yuan.
(5) When the TK-JHTK-JH mineral interface active material (agent) of the present disclosure is used in cement concrete or mortar engineering, the durability is somewhat or remarkably improved as compared with that of conventional silicate cement, coal ash and ore slag admixtures. Firstly, the newly mixed concrete or mortar is more stable in working property (flowability, dispersity and slump); secondly, the early strength develops well, and the long-term strength is not degraded; thirdly, a structure is relatively low in shrinking percentage at a plasticizing stage and a hardening stage, and a relatively good function of preventing cracks or seams caused by shrinkage can be achieved; fourthly, the impermeability is improved, a great amount of gaps can be filled and the porosity is reduced as inorganic active fine aggregate is increased, and thus the impermeability can be changed; fifthly, the water demand is reduced, only chemical bonds are changed when non-active inorganic fine aggregate is changed into active inorganic granules, ionic binding is accelerated, and the ion particles are dense inside with gaps smaller than those of silicon calcium ions of set cement, coal ash hollow glass beads or ore slag powder, so that the water demand is relatively reduced, concrete or mortar is more compact and more stable in volume, and the morphology can be improved better; sixthly, the corrosion resistance is improved, and due to increase of the non-active aggregate, even after modification, the activity can be improved, and the corrosion resistance can be improved as compared with that of active cement, coal ash and ore slag granules in concrete or mortar. The principle is that chemical bonds and internal structures of set cement formed through chemical and physical interface ionic bond modification are not changed, but the compactness, the binding strength and the crushing strength of the set cement are better than those of cement clinker, coal ash and ore slag admixtures, and the durability of the set cement to acid and base, carbonization, freezing and thawing, abrasion and the like is better.

### Detailed Description of the Embodiments

The present disclosure is further described below in combination with embodiments, but the implementations of the present disclosure are not limited to this.

### Embodiment 1

Preparation of 10000 liters of product is taken as an example.

When preparing a liquid product and a solid product of the TK-JHTK-JH mineral interface active material (agent) composition, in percentage by weight, adding 5000kg of sulfuric acid into a reactor, and heating to 80°C; when stirring, adding 3000kg of coal ash, 1000kg of silica fume and 1000kg of phosphorus slag in sequence, performing extraction reaction for 6 hours, precipitating, separating, and performing filter pressing, thereby obtaining a mixture containing sulfur, aluminum, silicon and phosphate, wherein the solid content of the mixture is 40-45%; uniformly feeding a mixed liquid into a dissolved polyether plasticizer of which the solid content is 40% in a dripping mode, wherein the components include 50% of mixed liquid, that is, 5000kg, and 4800kg of liquid polyether plasticizer; polymerizing for 4 hours under the condition of sufficient stirring at 35°C, adding 200kg of triisopropanolamine, continuously stirring to polymerize for 1.5 hours, and cooling to the normal temperature, thereby obtaining a liquid product of the TK-JH mineral interface active material (agent), and further concentrating, and performing spray-drying, thereby obtaining a solid product.

### Embodiment 2

Preparation of 10000 liters of product is taken as an example.

When preparing a liquid product and a solid product of the TK-JHTK-JH mineral interface active material (agent) composition, in percentage by weight, adding 5000kg of polycarboxylic acid water reducing plasticizer of which the solid content is 45% into a reactor, further adding 1500kg of tap water, sufficiently and uniformly stirring, keeping the temperature at 45°C, adding 1500kg of aluminum sulfate, 1000kg of ferrous sulfate, 500kg of water glass, 300kg of sodium phosphate and 200kg of triethanolamine in sequence, sufficiently dissolving and performing polymerization reaction for 6 hours, cooling to the normal temperature, inspecting, discharging, metering, packaging and warehousing, thereby obtaining a liquid product of the TK-JH mineral interface active material (agent) composition, and spraying, drying, thereby obtaining a solid product of the TK-JH mineral interface active material (agent) composition.

### Embodiment 3

Preparation of 10000 liters of product is taken as an example.

When preparing a liquid product and a solid product of the TK-JH mineral interface active material (agent) composition, in percentage by weight, adding solids, including 3000kg of low-ferric aluminum sulfate, 2200kg of aluminum potassium sulfate, 2000kg of superfine silica micropowder, 1500kg of melamine water reducing plasticizer, 500kg of lignin sodium sulfonate and 500kg of sodium tripolyphosphate into a reactor, mixing to cure for 4 hours at 60°C, spraying 300kg of diethanol amine, continuously stirring to cure for 1 hour, cooling to the normal temperature, discharging, inspecting, metering and warehousing, thereby obtaining a solid TK-JH mineral interface active material (agent), and furthermore in percentage by weight, adding an equal amount of tap water, that is, adding 5000kg of solid product into 5000kg of tap water, and sufficiently stirring to dissolve for 2 hours, thereby obtaining a liquid product of the TK-JHTK-JH mineral interface active material (agent).

### Embodiment 4

Preparation of 10000 liters of product is taken as an example.

When preparing a liquid product and a solid product of the TK-JH mineral interface active material (agent) composition, in percentage by weight, adding 2800kg of sulfuric acid and 200kg of phosphoric acid into a reactor, and subsequently adding 2000kg of bauxite, 1000kg of iron slag and 1000kg of water glass in sequence; performing extraction reaction for 6 hours at 80°C, feeding filtrate into 2800kg of naphthalene sulfonate water reducing plasticizer of which the solid content is 45%, and sufficiently stirring to polymerize for 3 hours at 45°C; further adding 100kg of triethanolamine and 100kg of triisopropanolamine, stirring to polymerize for 2 hours, discharging, inspecting, packaging and warehousing, thereby obtaining a liquid of the TK-JH mineral interface active material (agent) composition, and further performing spray-drying, thereby obtaining a solid product.

### Embodiment 5

Preparation of 10000 liters of product is taken as an example.

When preparing a liquid product and a solid product of the TK-JH mineral interface active material (agent) composition, in percentage by weight, adding 4000kg of liquid aluminum sulfate into a reactor, stirring at 60°C, adding 700kg of liquid ferrous sulfate, 400kg of phosphoric acid, 200kg of triethanolamine, 100kg of diethanol amine, 2000kg of water glass and a lignin water reducing agent in sequence, performing polymerization reaction for 8 hours, cooling to the normal temperature, discharging, inspecting, packaging and warehousing, and discharging, inspecting, packaging and warehousing, thereby obtaining a liquid of the TK-JH mineral interface active material (agent) composition, and further performing spray-drying, thereby obtaining a solid product.

### Embodiment 6

A use method of a TK-JH mineral interface active material (agent) composition liquid product in a cement plant:
by weight, the use method for a cement manufacturing company is as follows: uniformly spraying the product on the surface of non-active limestone (the particle size of crushed limestone is 20-60mm), uniformly mixing with cement clinker according to a ratio, and feeding into a ball mill for powder milling, wherein every 100kg of limestone is sprayed with 4kg of liquid TK-JH mineral interface active material (agent), every 100kg of cement product is added with 30-50kg of non-active limestone, generally 42.50 ordinary silicate cement is added with 40kg of non-active limestone, 45.5R early-strength ordinary silicate cement is added with 35kg of limestone, 45-50kg of limestone can be added into cement of a lower grade, and the added limestone or other non-active mineral materials are all limestone or other non-active mineral materials added with a TK-JH mineral interface active material (agent) composition according to a ratio; the power milling in the ball mill lasts for 30 minutes, and the fineness mesh number meets the cement product quality requirement standard.

### Embodiment 7

A use method of a K-HZTK-JH mineral interface active material (agent) composition solid product in a cement plant:
the use technique (method) of the TK-JH mineral interface active material (agent) composition solid product is similar to that of the liquid product, generally the adding amount thereof is 50-80% of that of the liquid product, that is, every 100kg of non-active basaltine is added with 2-3kg of solid product, an adding method is as follows: uniformly spraying the solid product on the surface of basaltine, uniformly stirring, and feeding into a ball mill for powder milling together. The method is identical to the technical method of the liquid product, that is, steps of inspecting, metering, packaging, warehousing or using on construction sites after levigation is completed are needed.

### Embodiment 8

A use method of the TK-JH mineral interface active material (agent) composition liquid product in a cement concrete or mortar station or a non-active stone field:
a use technique in the cement concrete or mortar station or the non-active stone field is as follows: in percentage by weight, mounting a mixing machine and a heating powder mill in the cement concrete or mortar station or the non-active stone field, primarily crushing non-active mineral materials (iron ore or others), subsequently conveying to an on-site station, uniformly spraying 5kg of liquid or 3kg of solid of a TK-JH mineral interface active material (agent) composition into every 100kg of non-active materials, uniformly mixing, feeding into a powder mill of 80°C, performing powder milling for 50 minutes, sufficiently curing till the fineness mesh number is 200 meshes, discharging, inspecting, metering, and feeding into a storage cabin of the mixing station for later inspection and use. The adding amount of a material cured (activated) by using the TK-JH mineral interface active material (agent) composition accounts for 20-50% of the total amount of a substituted binding material, that is, 20-40% of high-grade concrete or mortar can be substituted, 30-50% of low-grade concrete or mortar can be substituted, an adding method is as follows: directly feeding into a metering storage system, and metering and adding the TK-JH mineral interface active material (agent) composition into concrete or mortar for later stirring and use in a qualified experimental ratio.

### Embodiment 9

A use method of a TK-JH mineral interface active material (agent) composite liquid product in a waste construction brick and set cement field:
a use technique in the waste construction brick and set cement field is as follows: in percentage by weight, mounting a mixing machine and a heating powder mill in the waste construction brick and set cement field, primarily crushing non-active mineral materials (waste construction bricks, set cement or others), subsequently conveying to an on-site station, uniformly spraying 7kg of liquid or 5kg of solid of a TK-JH mineral interface active material (agent) composition into every 100kg of non-active materials, uniformly mixing, feeding into a powder mill of 80°C, performing powder milling for 50 minutes, sufficiently curing till the fineness mesh number is 200 meshes, discharging, inspecting, metering, and feeding into a storage cabin of the mixing station for later inspection and use. The adding amount of a material cured (activated) by using the TK-JH mineral interface active material (agent) composition accounts for 30-60% of the total amount of a substituted binding material, that is, 25-50% of high-grade concrete or mortar can be substituted, 30-60% of low-grade concrete or mortar can be substituted, an adding method is as follows: directly feeding into a metering storage system, and metering and adding the TK-JH mineral interface active material (agent) composition into concrete or mortar for later stirring and use in a qualified experimental ratio.

### Embodiment 10

A use method of a TK-JH mineral interface active material (agent) composite liquid product in cement concrete mortar:
in the percentage of the total amount of binding material in cement concrete or mortar, adding 1-3kg (solid or liquid) of TK-JH mineral interface active material (agent) into every 100kg of binding material. The use method is as follows: when preparing the cement concrete or mortar, adding cement with other binding powder materials, sand, stone, water and additives, and uniformly mixing. The use purposes in ordinary or high-performance concrete mortar lie in that: (1) under conditions of identical design ratios and construction environments, the early strength of cement concrete and mortar is increased by 30-80%, the long-term strength is increased by 10-30%, the construction period is shortened, and the time expense and the equipment rental fee are saved; (2) in case of identical design strength grades or quality standards, the amount of a binding material such as cement and the like is reduced by 20-30%, the amount of high-energy consumption and high-pollution cement binding material is reduced, environment pollution caused thereby is reduced, and meanwhile the material expense and the production cost are saved as the cement binding material is a component with the highest cost in the concrete or mortar; (3) surface activity of non-active aggregate and stone is excited, the chemical binding property of surfaces of an active cement binding powder material and non-active aggregate is improved, and thus the physical properties (strength and binding force) can be improved.

The product of the present disclosure has the following property indexes: Inspection items and technical requirements of the TK-JH mineral interface active material (agent) composition include homogeneity indexes and physical property indexes. See the inspection items and the technical indexes in table 1 and table 2.

**Table 1 Inspection items and technical indexes of homogeneity indexes of TK-JH solid and liquid products**

| Inspection items | Unit | Technical indexes |
|---|---|---|
| Solid content | % | ≥40 |
| Base content | % | ≤0.5 |
| Chlorine ion content | % | ≤0.01 |
| pH value | / | 6.0±0.5 |
| Density | g/m³ | ≥1.08 |
| Sodium sulfate content | % | ≤5.0 |
| Reducing sugar content | % | ≤5.0 |
| Water reducing rate of mortar | % | ≥12 |
| Fineness (0.08mm sieving residue) | % | ≤5.0 |
| Water content | % | ≤1.0 |

**Table 2 Inspection items and technical indexes of physical property indexes of TK-JH solid and liquid products**

| (Property after cement clinker is added into TK-JH stone powder) | | | |
|---|---|---|---|
| Inspection items | | Unit | Technical indexes |
| Fineness | | Mesh | ≥300 |
| Setting time | Initial setting | min | ≥45 |
| | Final setting | h | ≤10 |
| Stability | | Boiling method | Qualified |
| MgO content | | % | ≤5.0 |
| SO₃ content | | % | ≤4.0 |
| Compressive strength | 3d | MPa | ≥16.0 |
| | 28d | | ≥42.5 |
| Breaking strength | 3d | MPa | ≥4.0 |
| | 28d | | ≥6.5 |

| | | | |
|---|---|---|---|
| Notes: 1. Ingredients: 60% of cement clinker, 35% of active stone powder, 5% of gypsum; 2. 3d strength of cement clinker: compressive strength/breaking strength=36.1/6.1, 28d: 63.1/10.0. | | | |

Instruction: the technical property index of cement prepared from 35% of mineral material with the TK-JH mineral interface active material (agent) and 60% of cement clinker meets the technical standard of ordinary silicate cement 42.5R.

**Table 3 Technical properties of stone powder with non-active mineral interface active materials**

| Inspection items | | Unit | Technical indexes |
|---|---|---|---|
| Fineness (specific surface area) | | m²/kg | ≥500 |
| Water demand ratio | | % | ≤100 |
| Water content | | % | ≤3.0 |
| Chloride ion content | | % | ≤0.06 |
| Sulfur trioxide content | | % | ≤3.0 |
| Magnesium oxide content | | % | ≤3.0 |
| Ignition loss | | % | ≤5.0 |
| Activity indexes | 7d | % | ≥80 |
| | 28d | % | ≥100 |
| Alkali-aggregate reaction inhibition | 14d expansion rate reduction value | % | ≥30 |
| Chloride ion impermeability | 28d electric flux ratio | % | ≤30 |

Instruction: after a high-performance activity-enhanced material is added into non-active mineral stone powder for curing, the activity index is superior to property indexes of an active admixture and first-grade coal ash, and is approximate to technical properties of levigated ore slag powder.

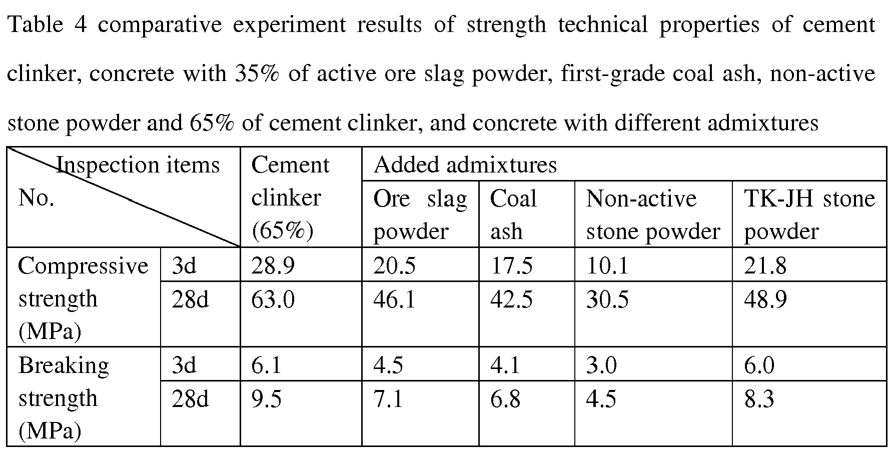

**Table 5 Technical property comparative tests (durability comparison) of ordinary cement and concrete with mineral micropowder, coal ash, non-active stone powder and TK-JH stone powder**

| Inspection items | | Index value | Measured value | | | | |
|---|---|---|---|---|---|---|---|
| | | | Ordinary concrete | Ore slag powder concrete | Coal ash concrete | Stone powder concrete | TK-JH concrete |
| Ratio of bleeding rate % | | ≤60 | 75 | 90 | 55 | 100 | 48 |
| Setting time | Initial setting (min) | ≥45 | 280 | 380 | 390 | 351 | 395 |
| | Final setting (h) | ≤10 | 5:30 | 8:00 | 8:30 | 7:30 | 8:20 |
| Slump (mm) | Initial | ≥200 | 190 | 205 | 210 | 180 | 225 |
| | 1 hour | ≥160 | 120 | 170 | 185 | 120 | 220 |
| Compressive strength (MPa) | 1d | ≥12.0 | 15.0 | 10.0 | 8.0 | 6.0 | 18.0 |
| | 3d | ≥21.0 | 22.0 | 18.0 | 15.0 | 13.0 | 24.8 |
| | 7d | ≥33.0 | 33.5 | 31.0 | 27.0 | 23.5 | 33.1 |
| | 28d | ≥38.0 | 42.0 | 38.5 | 36.9 | 31.0 | 41.3 |
| Ratio of shrinkage (%) 28d | | ≤120 | 123 | 133 | 125 | 130 | 108 |
| Freezing resistance (F) | | ≥100 | 80 | 55 | 50 | 31 | 150 |
| Wearing resistance coefficient (K) | | ≥0.85 | 0.80 | 0.85 | 0.95 | 0.65 | 1.0 |
| Impermeability (P) | | ≥8.0 | 8.0 | 6.0 | 8.5 | 4.5 | 12 |
| Impact resistance ratio (%) | | ≥130 | 128 | 125 | 130 | 110 | 165 |
| Reinforced steel corrosion resistance | | Non-corroding | No | No | No | No | No |
| Alkali-aggregate reaction inhibition 14d expansion rate reduction value | | ≥30% | - | 5 | 10 | - | 30 |
| chloride ion impermeability 28d electric flux ratio | | ≤30% | - | - | - | - | 30 |

| | | | | | | | |
|---|---|---|---|---|---|---|---|
| Notes: 1. Ingredients: reference concrete is C30, 380kg of 42.5R ordinary silicate cement, 781kg of sand, 160kg of water and 3.8kg of polycarboxylate water reducing agent; 2. Other ingredients: 247kg of 42.5R ordinary silicate cement is added, 133kg of ore slag powder or 133kg of coal ash is added respectively, or 133kg of non-active stone powder is added, or 133kg of TK-JH stone powder is added, and the amounts of additives, sand, stone and water are not changed; 3. The experimental comparison result shows that the TK-JH stone powder is excellent in comprehensive property and can meet the technical property requirements of concrete on durability. | | | | | | | |

**Table 6 Comparison of economic properties of TK-JH activity-enhanced ore powder concrete with ordinary silicate cement, ore slag concrete and coal ash concrete (Comparison of economic properties when meeting identical strength grades, by taking the grade of C30 concrete as an example)**

| C30 concrete material variety (amount per cubic meter kg) | Ordinary cement concrete | Concrete with ore slag powder | Concrete with coal ash | Concrete with TK-JH stone powder |
|---|---|---|---|---|
| 42.5R ordinary cement | 360 | 235 | 260 | 216 |
| With ore slag powder | - | 145 | - | - |
| With second-grade coal ash | - | - | 160 | - |
| With TK-JH active stone powder | - | - | - | 144 |
| Stone | 1096 | 1097 | 1099 | 1036 |
| Sand | 793 | 763 | 723 | 796 |
| Water reducing agent | 3.6 | 4.0 | 4.5 | 3.6 |
| Expense of each cubic meter of C30 material (Yuan) | 303.26 | 289.12 | 290.03 | 242.84 |

| | | | | |
|---|---|---|---|---|
| Notes: 1. Transportation distance: the transportation distance of each ton of cement is 200 kilometers, the transportation distance of sand, stone and TK-JH stone powder is 30 kilometers; 2. Material arrival price: cement: 500 yuan/ton, stone: 50 yuan/ton, sand: yuan/ton, TK-JH stone powder: 100 yuan/ton, coal ash: 250 yuan/ton, ore slag powder 330 yuan/ton, and water reducing agent: 5800 yuan/ton; 3. The economic analysis result shows: under the condition of same technical (construction) properties, the material expense of every cubic meter of C30 concrete of TK-JH activity-enhanced stone powder is reduced by 60.42 yuan/m³ as compared with that of ordinary silicate cement concrete, and the reduction rate is 20%; the material expense is reduced by 46.26 yuan/m³ as compared with that of ore slag powder concrete, and the reduction rate is 16%; the material expense is reduced by 47.19 yuan/m³ as compared with that of concrete with second-grade coal ash, and the reduction rate is 16%; 4. Actually, the transportation expense of TK-JH stone powder is 20 yuan/ton, the power fee, the labor cost and the active material expense are 50 yuan/ton, and the total sum is 70 yuan/ton, here it is taken as 100 yuan/ton in consideration of cost increase caused by variation of various factors. | | | | |

**Table 7 Technical properties of different ingredients in TK-JH stone powder silicate cement**

| Ingredients: TK-JH stone powder: C clinker | Setting time (min/h) Initial setting/ final setting | Breaking strength (MPa) 3d/28d | Compressive strength (MPa) 3d/28d |
|---|---|---|---|
| 20:80 | 208/4:30 | 5.1/8.1 | 26.0/49.8 |
| 30:70 | 215/4:45 | 5.0/7.9 | 25.3/48.9 |
| 40:60 | 233/4:51 | 4.9/7.6 | 25.0/48.3 |
| 50:50 | 228/4:58 | 4.6/7.3 | 24.6/47.8 |
| 60:40 | 236/4:59 | 4.3/7.1 | 24.1/46.6 |
| 70:30 | 245/5:10 | 4.2/7.0 | 23.3/45.0 |
| 80:20 | 250/5:36 | 4.0/6.8 | 21.0/43.1 |
| 42.5 ordinary cement | 213/4:10 | 3.5/6.5 | 16.0/42.5 |

| | | | |
|---|---|---|---|
| Notes: 1. The quality of TK-JH stone powder meets the technical properties of table 2; C clinker is silicate cement clinker, the quality meets 68.2% CaO content, strength (MPa): breaking strength (3d/28d)=6.3/9.1, compressive strength (3d/28d)=27.3/68.9; 2. Test method: preparing the binding material from the ingredients, and inspecting according to a cement standard method. | | | |

What needs to be explained is that the above embodiments are only used for describing rather other limiting the technical solutions of the present disclosure, although the present disclosure is described in detail with reference to the embodiments, a person of ordinary skill in the art shall understand that the present disclosure can be still modified or equivalently substituted, and any modification or partial substitution within the spirit and scope of the present disclosure shall be included in the scope of the claims of the present disclosure.

## Claims

1. A TK-JH mineral interface active material, consisting of the following ingredients in percentage by weight: 30-60% of sulfate, 20-30% of silicate, 20-30% of plasticizing water reducing agent, 3-6% of phosphate and 1-3% of alkylol amine salt, or consisting of 67-79% of complex containing sulfate, silicate and phosphate, 1-3% of alkylol amine salt and 20-30% of plasticizing water reducing agent, wherein the sum of the weight percents of raw materials in either of the above two solutions is 100%.

2. The TK-JH mineral interface active material according to the claim 1, wherein the sulfate is selected from one or more of aluminum sulfate, low-iron aluminum sulfate, liquid aluminum sulfate, calcium sulfate, ferrous sulfate, potassium sulfate, sodium sulfate, sodium thiosulfate and aluminum potassium sulfate.

3. The TK-JH mineral interface active material according to the claim 1, wherein the silicate is selected from one or more of aluminum silicate, calcium silicate, potassium silicate, sodium silicate, sodium metasilicate pentahydrate, sodium potassium silicate, silicic acid, silicon dioxide powder and superfine silicon dioxide micropowder.

4. The TK-JH mineral interface active material according to the claim 1, wherein the plasticizing water reducing agent is selected from one or more of a polycarboxylate water reducing agent, a naphthalenesulfonate water reducing agent, a sulfamate water reducing agent, a melamine water reducing agent, a lignin water reducing agent, a dextrin starch water reducing agent, starch ether, cellulose ether, an anti-cracking anti-corrosion plasticizer, polyoxyethylene ether and phosphoric acid trisphenol polyether.

5. The TK-JH mineral interface active material according to the claim 1, wherein the phosphate is selected from one or more of phosphoric acid, sodium phosphate, zinc phosphate, ferrophosphorus powder and sodium tripolyphosphate.

6. The TK-JH mineral interface active material according to the claim 1, wherein the alkylol amine salt is selected from one or more of triethanolamine, triisopropanolamine, ethidene diamine and triethylamine.

7. The TK-JH mineral interface active material according to the claim 1, wherein when the TK-JH mineral interface active material consists of 67-79% of complex containing sulfate, silicate and phosphate, 1-3% of alkylol amine salt and 20-30% of plasticizing water reducing agent in percentage by weight, the complex is selected from one or more coal ash, coal slag, bauxite, ferric slag, phosphorus slag, ferrophosphorus slag, silica fume, ore slag, ashstone, silica sand, waste brick stone, cement concrete construction wastes and water glass in which the comprehensive index of aluminum oxide, silicon dioxide, ferric oxide, ferroferric oxide and phosphorus pentoxide is greater than 90%, and is a liquid obtained through sulfuric acid acidation treatment, concentration and filtration or a solid obtained through further spray-drying.

8. A preparation method of the TK-JH mineral interface active material according to any one of the claims 1-6, comprising the following steps:
(a1) adding sulfate, silicate or a silicon compound, phosphate and a plasticizing water reducing agent into a mixing kettle, mixing for 3-4 hours at the constant temperature of 60-80°C;
(a2) adding alkylol amine salt into the mixing kettle, continuously stirring for 30-60 minutes, and cooling to the normal temperature, thereby preparing a TK-JH mineral interface active material (agent) solid; further adding water into the solid, and sufficiently dissolving and stirring for 1-3 hours for polymerization reaction at 25-45°C, thereby obtaining a TK-JH mineral interface active material (agent) liquid product.

9. A preparation method of the TK-JH mineral interface active material according to the claim 7, comprising the following steps:
(b1) adding one or more of coal ash, coal slag, bauxite, ferric slag, phosphorus slag, ferrophosphorus slag, silica fume, ashstone, ore slag, silica sand, waste brick stone, cement concrete construction wastes and water glass into a dissolving tank, uniformly stirring, adding sulfuric acid to extract for 4-8 hours at 60-90°C, precipitating, and filtering, thereby obtaining a complex containing sulfate, aluminate, silicate and phosphate;
(b2) further adding the plasticizing water reducing agent into the complex, performing polymerization reaction for 3-6 hours at 25-45°C, subsequently adding the alkylol amine salt, continuously stirring for 1-2 hours for polymerization, reducing the temperature, and cooling, thereby obtaining a TK-JH mineral interface active material (agent) liquid; and further performing spray-drying, thereby obtaining a TK-JH mineral interface active material (agent) solid product.

10. A preparation method of the TK-JH mineral interface active material according to any one of the claims 1-7, comprising the following steps: uniformly spraying the TK-JH mineral interface active material (agent) on the surface of a non-active mineral material, feeding into a powder mill for powder milling and curing, thereby obtaining a non-active mineral material with active minerals with relatively high activity.

## Amended claims

### Amended claims under Art. 19.1 PCT

1. A TK-JH mineral interface active material, consisting of the following ingredients in percentage by weight: 30-60% of sulfate, 20-30% of silicate, 20-30% of a plasticizing water reducing agent, 3-6% of phosphate and 1-3% of alkylol amine salt, wherein the sum of the weight percentages of raw materials is 100%.

2. The TK-JH mineral interface active material according to the claim 1, wherein the sulfate is selected from one or more of aluminum sulfate, low-iron aluminum sulfate, liquid aluminum sulfate, calcium sulfate, ferrous sulfate, potassium sulfate, sodium sulfate, sodium thiosulfate and aluminum potassium sulfate.

3. The TK-JH mineral interface active material according to the claim 1, wherein the silicate is selected from one or more of aluminum silicate, calcium silicate, potassium silicate, sodium silicate, sodium metasilicate, sodium potassium silicate, silicic acid, silicon dioxide powder and superfine silicon dioxide micro powder.

4. The TK-JH mineral interface active material according to the claim 1, wherein the plasticizing water reducing agent is selected from one or more of a polycarboxylate water reducing agent, a naphthalenesulfonate water reducing agent, a sulfamate water reducing agent, a melamine water reducing agent, a lignin water reducing agent, a dextrin starch water reducing agent, starch ether, cellulose ether, an anti-cracking anti-corrosion plasticizer, polyoxyethylene ether and phosphoric acid trisphenol polyether.

5. The TK-JH mineral interface active material according to the claim 1, wherein the phosphate is selected from one or more of phosphoric acid, sodium phosphate, zinc phosphate, ferrophosphorus powder and sodium tripolyphosphate.

6. The TK-JH mineral interface active material according to the claim 1, wherein the alkylol amine salt is selected from one or more of triethanolamine, triisopropanolamine, ethidene diamine and triethylamine.

7. A preparation method of the TK-JH mineral interface active material according to any one of the claims 1-6, comprising:
(a1) adding sulfate, silicate or a silicon compound, phosphate and a plasticizing water reducing agent into a mixing kettle, mixing for 3-4 hours at the constant temperature of 60-80°C;
(a2) adding alkylol amine salt into the mixing kettle, continuously stirring for 30-60 minutes, and cooling to the normal temperature, to obtain a TK-JH mineral interface active (agent) material solid; further adding water into the solid, and sufficiently dissolving and stirring for 1-3 hours for polymerization reaction at 25-45°C, thus obtaining a TK-JH mineral interface active (agent) material liquid product.

8. A use method of the TK-JH mineral interface active material according to any one of the claims 1-6, comprising the steps of: uniformly spraying the TK-JH mineral interface active (agent) material on the surface of a non-active mineral material, feeding into a flour mill for powder milling and curing, thus enabling the non-active mineral material to have active minerals with relatively high activity.
